Europäisches Patentamt

European Patent Office

Office européen des brevets

(19)

(11) Publication number: **0 416 234 A2**

# EUROPEAN PATENT APPLICATION

(21) Application number: **90112470.1**

(22) Date of filing: **29.06.90**

(51) Int. Cl.5: **G01N 27/26**

(30) Priority: **05.09.89 US 402931**

(43) Date of publication of application:
**13.03.91 Bulletin 91/11**

(84) Designated Contracting States:
**DE FR GB**

(71) Applicant: **Hewlett-Packard Company**
**Mail Stop 20 B-O, 3000 Hanover Street**
**Palo Alto, California 94304(US)**

(72) Inventor: **Gordon, Gary Babcock**
**21112 Bank Mill Road**
**Saratoga, CA 95070(US)**

(74) Representative: **Liesegang, Roland, Dr.-Ing. et al**
**FORRESTER & BOEHMERT**
**Widenmayerstrasse 4 Postfach 22 01 37**
**W-8000 München 22(DE)**

(54) **Electrophoresis apparatus.**

(57) An electrophoresis capillary with dispersion-inhibiting cross-section for providing unprecedented levels of detection sensitivity of solutes in a separation collumn is disclosed. The higher level of sensitivity is accomplished by utilizing larger sample volumes contained in capillaries having non-circular cross-sections. The present invention avoids the unwanted turbulence, viscosity gradients, and gravity siphoning that plague previous conventional devices that employ circular capillaries having equivalent cross-sectional areas. The key to the enhanced performance that is achieved using the present invention is a novel non-circular capillary (32) which has a cross-sectional configuration that maximizes the central area of the capillary without creating the conditions that cause uneven flow through the capillary. The capillary (32) has a generally oblong cross-section. An exterior surface (46) encloses a capillary wall which defines two generally radial channels (35) that extend in opposite directions from the center of the capillary along its transverse axis. The maximum width dimension (37) of each channel is approximately fifty microns. The ratio of the length and width of the channels is generally equal to two or greater. The present invention combines the selectivity of a conventional, smaller, round capillary with the sensitivity of a capillary which is ten times larger.

FIG. 3a

EP 0 416 234 A2

## ELECTROPHORESIS APPARATUS

The present invention is an apparatus for separating gown solutes in a buffer solution. This invention is particularly concerned with the recognition of large biological materials which are transported through a fine capillary using chemical electrophoresis techniques.

Recent advances in biotechnology have accelerated the demand of research laboratories, healthcare facilities, and pharmaceutical manufacturers for devices which are capable of accurately and rapidly identifying extremely small quantities of inorganic and organic substances. Previous techniques, which include gas and liquid chromatography, have been employed to assay samples whose molecular structure is relatively small. Although chromatography may be successfully employed to resolve matures of inorganic and small organic molecules; the very, large and exceedingly complex molecules of amino acids, proteins, peptides, and DNA are more difficult to separate than the smaller molecules. Another serious flaw in chromatographic methods is the predicament that is encountered when the unknown sample is especially sparse, since chromatography utilizes relatively large amounts of the material which requires analysis. Other shortcomings that are experienced when liquid chromatography is practiced include inconsistent patterns of solute movement through the system which creates uneven flows called "dead zones" and undesirable laminar mixing as opposed to plug movement of the fluids.

Electrophoresis is another well-known procedure that enables the researcher or scientist to evaluate undetermined materials. Capillary electrophoresis utilizes an electric field which is imposed across a length of tubing or capillary that contains a mixture of the unknown sample and a non-reactive liquid often called a buffer solution. The electric field creates an electro-osmotic flow and causes the buffer and the constituents of the unknown sample to be pulled through the capillary. The electric field also creates a superimposed electrophoretic flow which separates the constituents of the sample according to their varying molecular drags and varying net electrical charges. Because dissimilar substances do not react to the drag and electrical attraction in the same way, they become increasingly separated into distinct zones or groups as they progress along the capillary. Each band of constituent material that makes up the original unseparated mixture of unknown material passes through the capillary by itself. At some point along this tubing, each band is examined and identified by a detector. One type of detector for electrophoretic separations measures the electrical conductivity of the bands in the capillary. An alternative detection scheme is a method called laser induced fluorescence. Although this technique is highly sensitive, it is costly and is limited to detecting compounds that fluoresce or which can be stimulated to do so.

Another previous system probes the unknown material by shining ultra-violet light through an unknown solute borne by a buffer solution and then gauging how much light is absorbed by the solute. This radiation absorption method is the most popular technique among the various available electrophoretic systems. The capillaries in this system must be kept very narrow so that all the material inside it moves without turbulence or eddy currents. This uneven flow is created when the electrical current that passes through the contents of the capillary heats the buffer solution. This heat is conducted radially from the center of the tube out to its periphery. The migration of heat establishes a radial thermal gradient, extending from a relatively hot zone at the center of the capillary to cooler temperatures at the capillary wall. These different heat levels across the vessel set up convection currents within the buffer solution that tend to mix the contents of the capillary in directions that are perpendicular to the flow of liquid and solute through the capillary tube. This miring destroys the sensitivity of the electrophoretic separation instrument because it tends to broaden the bands of separated solute. Another problem caused by this uneven heating in the capillary is the creation of viscosity gradients that also tend to broaden the solute bands. Most separation systems are also beset by an undesirable condition called gravity siphoning. When the two ends of the separation capillary are not precisely aligned, the difference in their heights causes an unwanted flow due to the efforts of gravitational forces to equalize the height of the contents of each column.

Conventional systems have been designed to minimize unwanted turbulence, viscosity gradients, and gravity siphoning by utilizing capillaries that are extremely narrow. Capillaries having relatively small cross-sections reduce uneven heating which generates unwanted eddy currents and viscosity gradients. The detriment suffered by this compromise is the severe reduction in sample size that can be analyzed by the detector at any given time. This relatively small sample volume which may be processed at any one time is a serious difficulty that is shared by all previous detection methods. To prevent undesirable dispersion of the solute caused by large thermal gradients, the diameter of conventional circular capillaries is usually kept at or below one hundred microns. Fifty microns is a common size for these capillaries. As a consequence, the sensitivity of conventional systems is limited to a level far below the one-part-per-million threshold, which is the current desirable detection accuracy which should be achieved to analyze mixtures of inorganic and small organic molecules.

As the technology of genetic engineering continues to evolve, diagnostic and measurement techniques which are more accurate, reliable, and sensitive become increasingly more valuable. Doctors, clinicians, and laboratory technicians need more powerful tools to explore the intricacies of the genetic code, to improve the hardiness and usefulness of plant and animal life in an effort to feed the world's burgeoning population, and ultimately to devise cures for inherited disabilities and dreaded diseases. The problem of providing a highly sensitive and precise separation system that overcomes the limitations that impair previous devices and techniques has presented a challenge to designers and innovators in the biochemical arts. The development of an effective and sensitive system for separating the components of an unknown biological sample would constitute a major technological advance in the biochemical and biotechnology industries. The enhanced performance that could be achieved using such an innovative device would satisfy a long felt need within the business and would enable manufacturers of drugs, medicines, and biological products to save substantial expenditures of time and money.

The problem underlying the invention is to provide an apparatus according to the first part of claim 1, which is adapted to inhibit the dispersion of a plurality of solutes and to optimize the separation of solutes while eliminating unwanted uneven heating in said capillary means.

This problem is accomplished by claim 1.

The Electrophoresis Capillary with Dispersion-Inhibiting Cross-Section disclosed and claimed in this patent application provides a higher level of detection sensitivity for any given detector technique than previous electrophoretic separation equipment. The higher level of sensitivity is accomplished by utilizing larger sample volumes contained in capillaries having non-circular cross-sections. The present invention avoids the unwanted turbulence that plagues previous conventional devices that employ circular capillaries having equivalent cross-sectional areas. The key to the enhanced performance that is achieved using the present invention is a novel non-circular capillary which has a cross-sectional configuration that maximizes the central area of the capillary without creating the conditions that cause uneven flow through the capillary. This capillary may be used to great advantage in combination with the inventor's previous invention, the Capillary Zone Electrophoresis Cell System.

The present invention utilizes a narrow bore capillary having one or more channels whose maximum width is approximately fifty microns. The preferred embodiment is a generally oblong capillary that resembles a rectangle with rounded ends which provides a much larger cross-sectional area for the transportation of solute in a buffer solution, while maintaining the optimal width that limits solute mixing. Alternative embodiments include configurations that resemble lens-shaped or lenticular cross-sections, rectangular and elliptical profiles, open figure-eights, and asterisk patterns. Another set of alternative forms of the invention include outer capillaries that enclose solid filaments having various shapes.

The Electrophoresis Capillary with Dispersion-Inhibiting Cross-Section is a novel device that offers unprecedented sensitivity in the electrophoretic detection of unknown solutes. The apparatus claimed in this patent application provides an effective, efficient, and powerful tool that will enable engineers and scientists in the medical instrumentation industry to construct valuable analysis equipment that will contribute to the advancement of the field of biotechnology.

An appreciation of other aims and objectives of the present invention and a more complete and comprehensive understanding of this invention may be achieved by studying the following description of a preferred embodiment and by referring to the accompanying drawings.

## BRIEF DESCRIPTION OF THE DRAWINGS

Figures 1 through 9 are each cross-sectional views. Figure 1 depicts a conventional circular capillary having a large inside diameter of one hundred and fifty microns.

Figure 2(a) reveals a conventional narrow-bore circular capillary shaving an inside diameter of fifty microns. Figure 2(b) illustrates the relationship between the temperature of the contents of the capillary and a given radius for the capillary shown in Figure 2(a).

Figure 3(a) exhibits the preferred embodiment of the present invention. Figure 3(b) is a rotated section illustration of an alternative embodiment of the invention which also incorporates aspects of the inventor's previous invention, The Capillary Zone Electrophoresis Cell System.

Figures 4(a) through 9 display alternative embodiments of the Applicant's invention. The capillary in Figure 4(a) has an oval configuration, while that in Figure 4(b) resembles a figure-eight.

Figure 5 portrays an "asterisk" pattern.

Figures 6, 7, and 8 illustrate a circular capillaries which each enclose a solid circular filament. The filament in Figure 7 has three contact appendages. Figure 8 reveals a capillary which circumscribes three solid filaments.

Figure 9 is a perspective view of a cast pre-form of fused silica which is drawn down to fabricate a flattened capillary having a non-circular cross-section.

## DETAILED DESCRIPTION OF A PREFERRED EMBODIMENT

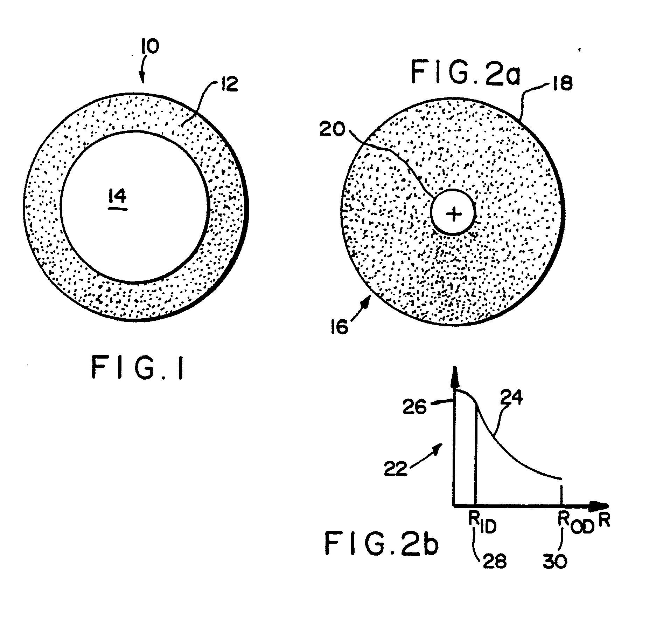

Figure 1 depicts an artificially large conventional capillary with an exaggerated circular cross-section 10. The distance between the capillary wall 12 and the center of the central area 14 is relatively large compared to the capillary 16 shown in Figure 2(a). Capillary 16 has an outside diameter 18, but sits inside diameter 20 is far less than that of capillary 10. When capillary 10 is used in an electrophoresis separation device, turbulence and undesirable mixing is caused by the radial thermal gradient that is created when the buffer solution carried by the capillary is heated by the electrical field imposed across the capillary that drives the separation process. The deleterious turbulence and eddy currents ruin the ability of capillary to separate the mixture of unknown compounds into distinct bands. This unwanted mixing can be substantially reduced by using a narrow bore capillary like the one illustrated in Figure 2(a). The thermal gradient generated by the smaller central area keeps the turbulence at tolerable levels. Figure 2(b) presents a graph 22 of temperature vs. radial position within the capillary 16. Curve 24 indicates that the highest temperature 26 within the capillary 16 may be found at its center. The temperature at the inside diameter 28, labeled R*ia*, is somewhat lower than the center; while the heat level at the outside diameter 30, labeled R*oa*, is the lowest point on the temperature curve.

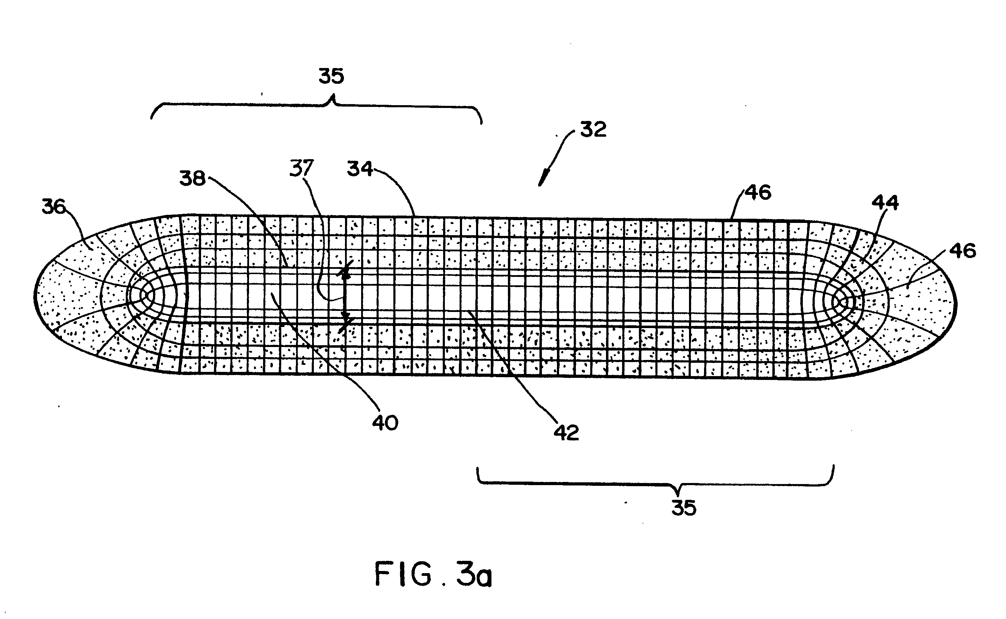

The compromise of trading sample volume for reduced turbulence, however, has a severe consequence: the volume of unknown sample that can be detected at any given time, and therefore, the sensitivity of the electrophoretic separation instrument, are both greatly diminished. The Electrophoresis Capillary with Dispersion-Inhibiting Cross-Section 32 revealed in Figure 3(a) eliminates this inexpedient compromise by increasing the sensitivity of the detector without tolerating the harmful convection mixing, viscosity gradients, and gravity siphoning. The preferred embodiment of the present invention employs a capillary having a generally non-circular cross-section. The innovative design approach shared by all the embodiments of the present invention is the simultaneous use of the largest possible cross-sectional capillary area and the shortest width of the channels which convey the solute and buffer solution through the capillary. The sample capacity of the capillary is an order of magnitude greater than that of a conventional round capillary having an equivalent channel width.

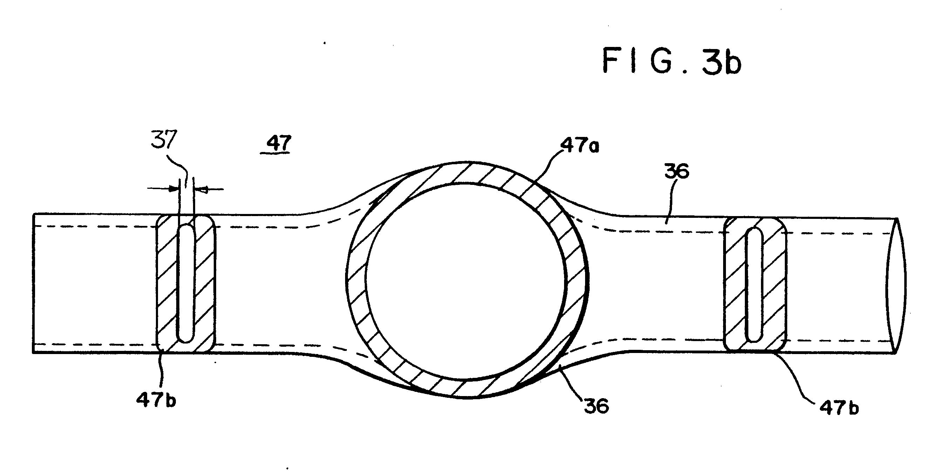

The capillary 32 portrayed in Figure 3 is generally oblong in shape. An exterior surface 34 encloses a capillary wall 36 which defines two generally radial channels 35 that extend in opposite directions from the center of the capillary along the transverse axis of the tube. The distance around the wall 36 is the total perimeter of the capillary 32. The width of each radial channel is denoted by reference numeral 37 and is demarcated by the greatest orthogonal distance across the walls 38 of the interior surface of the capillary 32. The mixture of solute and buffer solution is conveyed through central area 40. For a complete description of the operation of the capillary electrophoresis separation instrument, the reader is referred to the parent patent application entitled "Capillary Zone Electrophoresis Cell System" by the same inventor which has been incorporated into this application by reference. Reference numerals 42 and 44 point out isothermal lines while electric field lines are indicated by numeral 46. The present invention has been designed to minimize the distance from any point in the cross-sectional area to the nearest point on the interior wall of the capillary. In the preferred embodiment, the maximum channel width 37 is approximately fifty microns. The ratio of the channel length 35 to channel width 37 is generally equal to two or greater.

Figure 3(b) depicts an alternative embodiment 47 of the present invention that utilizes an expanded cell 47a which is integrally formed within the capillary 36. Two cross-sectional portions 47b are shown on each side of the central cell 47a. The reader is encouraged to refer to the inventor's previous patent application, the "Capillary Zone Electrophoresis Cell System," for further details. Both the previous and the present invention are designed to improve detector sensitivity.

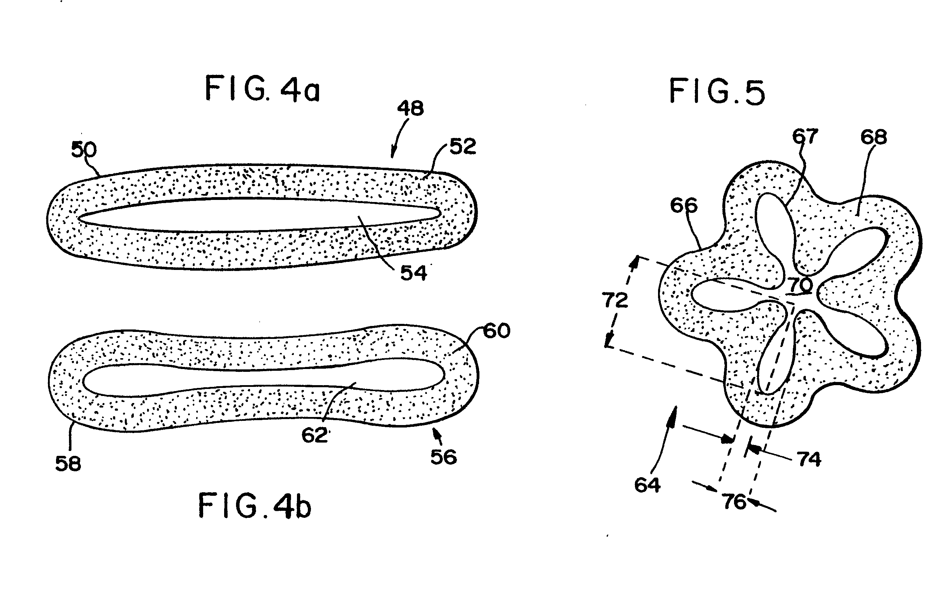

Figures 4(a), 4(b), and 5 illustrate alternative embodiments of the present invention. Capillary 48 includes an exterior 50, a wall 52, a central area 54, and has a generally oval cross-section. Capillary 56 comprises an exterior 58, a wall 60, a central zone 62, and resembles a figure-eight shape. The "asterisk" or star-shaped profile 64 pictured in Figure 5 provides an alternative approach to maximizing the ratio of total cross-sectional area to total channel length. The asterisk capillary 64 has an exterior 66, radial channels 67, a capillary wall 68, and a central area 70. The length of each radial channel 67 is denoted by dimension 72, while the center-to-wall distance and maximum width of the channels 67 are marked by reference numerals 74 and 76.

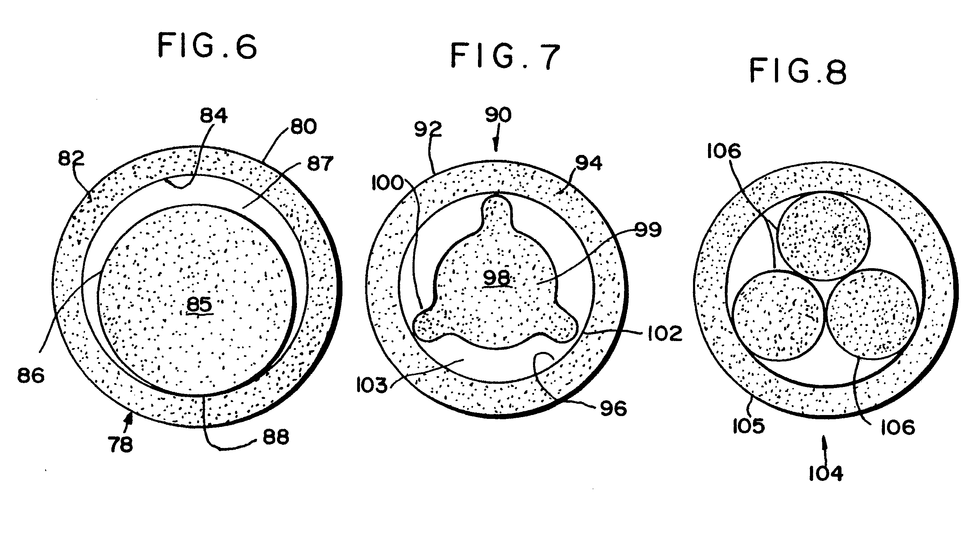

Figures 6 and 7 represent yet another class of alternative embodiments of the Electrophoresis Capillary with Dispersion-Inhibiting Cross-Section. Figure 6 depicts a circular capillary 78 that includes a solid interior filament. A conventional circular capillary 80 having a wall 82 and an inside diameter 84 encloses a filament 85 having an outside diameter 86. Reference numeral 87 denotes the channel in this embodiment. The capillary 80 and the filament 85 touch at contact point 88. The solid interior filaments may extend along the entire length of the separation column and may or may not be bonded to the outside capillary.

Figure 7 reveals yet another variation that maximizes cross-sectional area while holding the thermal gradient distance to a minimum. Another circular capillary 90 having an exterior 92 and a wall 94, and an inner diameter 96 encloses a solid interior filament 98 having an outside diameter 99 and three contact appendages 100. The filament 98 touches the capillary at three points 102. The channels 103 in this version of the invention lie between the capillary interior 96 and the outside diameter 99 of the filament 98. Figure 8 depicts a circular capillary 104 circumscribing three solid filaments 106.

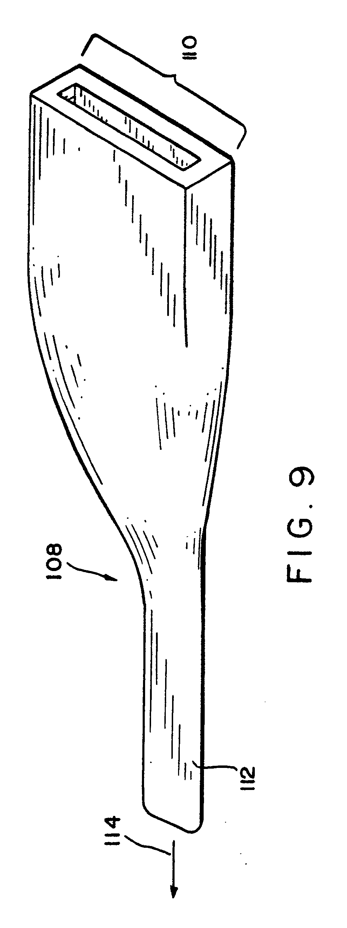

The processes utilized to fabricate the present invention are substantially the same as those employed to manufacture conventional round capillaries. A large ingot or pre-form of fused silica is drawn into a desired cross-section. The original ingot is much larger than the final product but has essentially the same cross-section. local heating sources are used to shape the final product. A typical cast pre-form 108 of fused silica having a rectangular cross-section is exhibited in Figure 9. The larger cross-section 110 shown at the right side of the drawing is held in place while the opposite end 112 is drawn down into the resulting capillary. The direction of force applied to the pre-form is indicated by arrow 114.

One measure of the performance of separation instruments concerns the concept of "theoretical plates," a statistical term which is used to measure the resolution power of a separation system. A relatively small capillary having a diameter of fifty microns is capable of resolving approximately one million theoretical plates. If large conventional circular capillaries are used, this figure drops rapidly by several orders of magnitude, indicating that the separation capacity of the column has been seriously degraded. By substantially eliminating eddy currents, viscosity gradients, and gravity siphoning, the Electrophoresis Capillary with Dispersion-Inhibiting Cross-Section can maintain unprecedented resolution levels of one million theoretical plates and above. The present invention combines the selectivity of a conventional, smaller, round capillary with the sensitivity of a capillary which is ten times larger.

Although the present invention has been described in detail with reference to a particular preferred embodiment, persons possessing ordinary skill in the art to which this invention pertains will appreciate that various modifications and enhancements may be made without departing from the spirit sand scope of the claims that follow.

## Claims

1. Electrophoresis apparatus comprising capillary means (32,47,48,56,64,78,90,104) having a wall (36) which is transparent to a beam of detection radiation, at least one channel (35) having a width dimension (37); and an interior chamber (40) capable of conveying a solute in a buffer, **characterized** by a configuration (32,47,48,56,64,78,90,104) designed to maximize the cross-sectional area of said capillary means and to minimize said width dimension (37) of said channel.

2. Apparatus as claimed in claim 1, in which said configuration (32) generally resembles a flattened circle.

3. Apparatus as claimed in claim 2, **characterized** in that said configuration (32) has a channel length dimension, the quotient of said channel length dimension and said width dimension (37) exceeding two.

4. Apparatus as claimed in one of claims 1 to 3, **characterized** in that said configuration (32) includes at least one and preferably two radial channels (35).

5. Apparatus as claimed in claim 4, **characterized** in that said at least one radial channel (35) is characterized by a plurality of lines extending from the transverse axis of said separation capillary (32) to a point on an interior wall(38); and any of said lines are shorter than a corresponding radius of a circular capillary having a cross-sectional area equal to that of said separation capillary.

6. Apparatus as claimed in claim 1, **characterized** in that said configuration (48) generally resembles an oval shape or an ellipse.

7. Apparatus as claimed in claim 1, **characterized** in that said configuration (56) approximates the shape of an open figure-eight.

8. Apparatus as claimed in claim 1, **characterized** in that said configuration (64) is designed in an asterisk pattern.

9. Apparatus as claimed in one of claims 1 to 8, **characterized** in that said capillary is composed of fused silica.

10. Apparatus as claimed in one of claims 1 to 9, **characterized** in that said radial channel (35) has a maximum width dimension (37) of 50 microns.

11. Apparatus according to claim 1, **characterized** in that said capillary means encloses an interior filament means (85,98,106) for optimizing the separation of said solutes while substantially eliminating uneven heating in said capillary means.

12. Apparatus as claimed in claim 11, **characterized** in that said interior filament means (85,98) is substantially circular.

13. Apparatus as claimed in claim 12, **characterized** in that said interior filament means further includes a plurality of contact appandages (100).

14. Apparatus as claimed in one of claims 1 to 13, **characterized** in that said capillary means is substantially non-cylindrical.

15. Apparatus as claimed in one of claims 1 to 14, **characterized** in that a ratio of a perimeter length of said wall and an interior area of said separation capillary is greater than a ratio of a perimeter length and an interior area of a circular capillary having a cross-sectional area equal to that of said separation capillary.

16. Apparatus as claimed in one of claims 11 to 15, **characterized** in that said interior filament means is fabricated from the same material as said capillary means.

17. Apparatus as claimed in one of claims 1 to 16, **characterized** by an integrally-formed expanded detection cell.

FIG.1

FIG.2a

FIG.2b

FIG. 3a

# FIG. 3b

37  47  47a  36  47b  36  47b

EP 0 416 234 A2

FIG. 4a

FIG. 5

FIG. 4b

EP 0 416 234 A2

FIG.6

FIG.7

FIG.8

EP 0 416 234 A2

FIG. 9

EP 0 416 234 A2